# EUROPEAN PATENT SPECIFICATION

(11) **EP 1 469 718 B1**
(45) Date of publication and mention of the grant of the patent: **25.01.2006**
(21) Application number: 02710281.3
(22) Date of filing: 25.01.2002
(51) Int. Cl.: A01K 13/00

(54) **A HORSE BLANKET ALLOWING FOR FREER MOVEMENT OF A HORSE IN USE**
EINE WÄHREND DES GEBRAUCHS EINE GRÖSSERE BEWEGUNGSFREIHEIT DES PFERDES ERLAUBENDE PFERDEDECKE
COUVERTURE POUR CHEVAL OFFRANT UNE PLUS GRANDE LIBERTE DE MOUVEMENT A UN CHEVAL LORSQU'IL LA PORTE

(43) Date of publication of application: 27.10.2004
(73) Proprietor: White Horse Holdings Limited, County Louth (IE)
(72) Inventor: Macguinness, Thomas Peter, Dromiskin, County Louth (IE)
(74) Representative: Ryan, Anne Mary
(86) International application number: PCT/IE2002/000007
(87) International publication number: WO 2003/067968

(56) References cited:
- EP-A- 1 121 854
- WO-A-98/08377
- AU-B- 553 401

## Description

### Technical Field

The present invention relates to horse blankets and, in particular, to a horse blanket of the type which is secured under the belly of a horse in use and the edge of which falls below the line of the point of elbow, see e.g. document WO-A-98/08377.

### Background Art

There are a wide variety of shapes and styles of horse blankets or rugs known from the prior art. The choice of a particular type or style of blanket may be affected by a number of variables, including the size of horse, the climate in which the blanket will be worn, whether the horse will spend the majority of its time indoors or outdoors and the length of time for which the blanket will be worn. There is great variation in size of horse blankets ranging from very small, lightweight summer sheets and indoor sheets to quartersheets used to keep a race horse warm while it cools down after exercise, to turnout rugs which are one of the largest of all types of horse blanket. Turnout rugs are used to protect a horse from cold climates and poor weather conditions and to prevent a horse from losing condition as a result of expending large amounts of energy keeping itself warm.

One of the main problems associated with turnout rugs and blankets of similar size and so-called depth is that the legs of the horse are prevented from moving freely when the blanket or rug is tightened underneath the belly. The portions of the blanket or rug which are drawn across the legs, when the securing means situated between the forelegs and hind legs on opposite edges of the blanket or rug are closed, are pulled taut when the horse extends its legs. This prevents the horse from moving its legs freely, which can cause friction-related injuries to the affected areas when the horse exercises or when the blanket or rug is worn for an extended period of time. The injuries caused in these instances affect very sensitive regions of the body of a horse, and it is quite common for these areas to become infected. In the case of a working horse this can lead to long periods of inactivity while the wounds heal, as it is recommended not to tack up a horse if the tack will come into contact with the affected areas on the horse.

In a similar fashion, serious friction related injuries to a show horse prevent an owner from showing the horse competitively, which can lead to long periods of inactivity for the horse and resultant loss of condition due to lack of exercise and lack of grooming while the wounds heal.

Additional problems arise as a result of the gathering or puckering of blanket material around the upper regions of the legs, especially the forelegs, between the inner leg and the body, which is likely to cause further friction-related injuries when the horse moves. As the legs are extended, so the material of the blanket becomes taut. When the horse moves its legs in the reverse direction, the blanket material frequently becomes trapped between the horse's inner leg and its body.

In the following description, the alternative terms "blanket" and "rug" are referred to by the single term "blanket".

A horse blanket is known which incorporates a shoulder gusset, which affords the forelegs of a horse a greater degree of movement than that afforded by a blanket without such a structure. The extra material incorporated in the shoulder gusset unfolds to accommodate the movement of the horse and there is consequently less resistance to the movement of the legs when the blanket has been secured and tightened, compared to a blanket without this feature. However, such a gusset does not eliminate the possibility of friction-related injuries occurring, and there is still the likelihood of the blanket material becoming trapped between the horse's inner legs and its body when the horse moves.

A further problem associated with blankets incorporating gussets is that the blanket can become easily ensnared on fence posts or trees for example when the horse uses these structures as a scratching post. The loose blanket material in the area of the gusset is capable of catching on exposed nails or broken twigs and branches.

A horse blanket is described in Australian Patent No. 553401 which incorporates a shoulder opening covered by loose flaps which is configured to form kick pleats. The kick pleats allow for the natural forward thrust of the shoulder as the horse moves.

It is an object of the present invention to provide a horse blanket which overcomes the disadvantages of the aforementioned blankets.

### Disclosure of Invention

Thus, the invention provides a horse blanket of the type which is secured under the belly of a horse in use and the edge of which falls below the line of the point of elbow, characterised in that said edge is provided with means allowing lengthwise extension of the blanket when the horse extends its legs and which prevent gathering of the blanket between the inner leg and the body of the horse during a reverse movement of the leg, said means comprising a cut-out disposed over each of the legs of the horse when the horse is in a square halt position, and in that the cut-outs on opposite sides of the blanket define a section therebetween which can be wrapped around and secured under the belly of the horse.

By horse herein is meant horses, ponies and the like, hereinafter referred to collectively as horses.

By edge herein is meant the outer perimeter of each side of the blanket.

By the line of the point of elbow is meant a horizontal, imaginary line along the side of a horse passing through the point of elbow on the foreleg as hereinafter described and illustrated.

By disposed over each of the legs of the horse is essentially meant disposed over an area beginning at the centre point of the horse's foreleg or hindleg and extending rearwards or forwards therefrom, respectively.

By "square halt position" is meant the dressage term referring to a horse standing still with all four legs carrying his weight equally, and perpendicular to the ground.

There are a number of advantages associated with use of the blanket according to the invention. The likelihood of a horse sustaining a friction-related injury while wearing the blanket is minimised due to the blanket being provided with means that allow lengthwise extension of the blanket when the horse is moving, resulting in minimal contact between the blanket material and the horse's legs, and the fact that the gathering of the blanket material between the inner leg and body of the horse is prevented. This also prevents any possibility of a horse with a pre-existing friction-related injury from aggravating that pre-existing injury due to the lack of contact between the horse's legs and the blanket when the horse is moving.

In addition to the above-mentioned advantages relating to the prevention of friction-related injuries, the provision of such means in the form of cut-outs disposed over the forelegs of the horse is advantageous in that a horse wearing the blanket will experience an increased level of comfort as opposed to that associated with the wearing of a blanket of conventional design, as there will be minimal friction or rubbing of blanket material against the horse's hide when the horse moves.

Preferably, the horse blanket is conformable to the body of the horse.

An advantage of the horse blanket being conformable to the body of the horse is that in situations where the blanket is to be worn in regions affected by cold climates, the blanket will afford better thermal protection to the horse as a result of its close fit to the horse's body, in that there will be less exposed body surface area on the horse from which heat can escape.

A further advantage is that the blanket, being securely fastened in conformity to the horse's body, is less likely to become detached from the horse in use or to become caught on jagged edges.

A still further advantage of the blanket is that the likelihood of friction-related injuries occurring is minimal, due to there being less material in the areas of the cut-outs which could gather and rub against the body of the horse as hereinabove described.

The blanket according to the invention, while ensuring a snug-fit to the body of the horse, also has an advantage for a mare with a foal at foot. Because of the lack of loose or gathered material in the area of the hind legs, the foal can readily suckle.

Suitably, the cut-outs are of a generally semi-circular shape in a plan view of the blanket.

An advantage of having the cut-outs in a semi-circular shape is that this shape matches very closely the contour and shape of the horse's body in the area thereof to which it is applied without restricting movement.

Preferably, the horse blanket is secured under the belly of the horse in use by at least two pairs of fastening means.

The fastening means can be straps or surcingles with associated loops and buckles or other inter-engaging means.

However, such fastening means can also be represented by a set of ties composed of elasticated material or strips of a plurality of hooks and eyes as sold under the trade mark VELCRO.

In general, two pairs of fastening means are used to close the opposing edges of blanket material underneath the belly of the horse.

However, for maximum conformation to the body of a horse, in the case of a larger horse and thus a correspondingly larger blanket, the preferred arrangement is an arrangement of three sets of straps or surcingles, the outermost straps crossing diagonally under the belly of the horse, while the innermost strap or surcingle adopts the line of a conventional girth.

The horse blanket according to the invention can be manufactured in lightweight, medium and heavy versions depending on requirements.

### Brief Description of Drawings

The invention will be Further illustrated by the following description of an embodiment thereof, given by way of example only with reference to the accompanying drawings in which:
Fig. 1, is a plan view, from above, of the horse blanket according to the invention; and
Fig. 2 is a schematic representation of a horse wearing the horse blanket depicted in Fig. 1.

### Mode for Carrying out the Invention

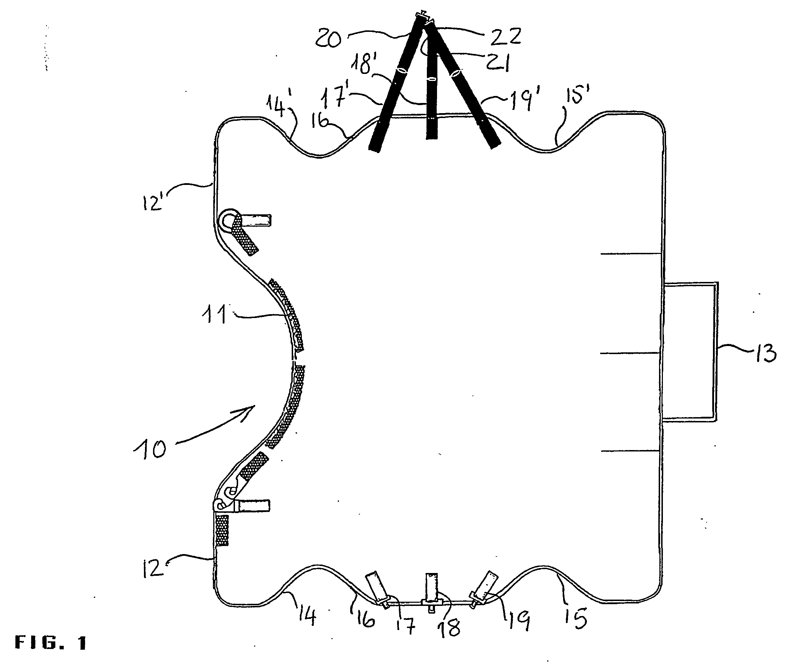

Referring to Fig. 1, there is indicated, generally at 10, a horse blanket of a padded construction filled with thermobonded fibre fill having a neck portion 11, front sections 12, 12', a tail section 13 and a pair of opposed cut-outs 14, 14' and 15, 15' on sides 16, 16', respectively.

The front sections 12, 12' of the blanket 10 are secured by means of known closure means, more particularly closure means of the type described and claimed in our WO 98/08377.

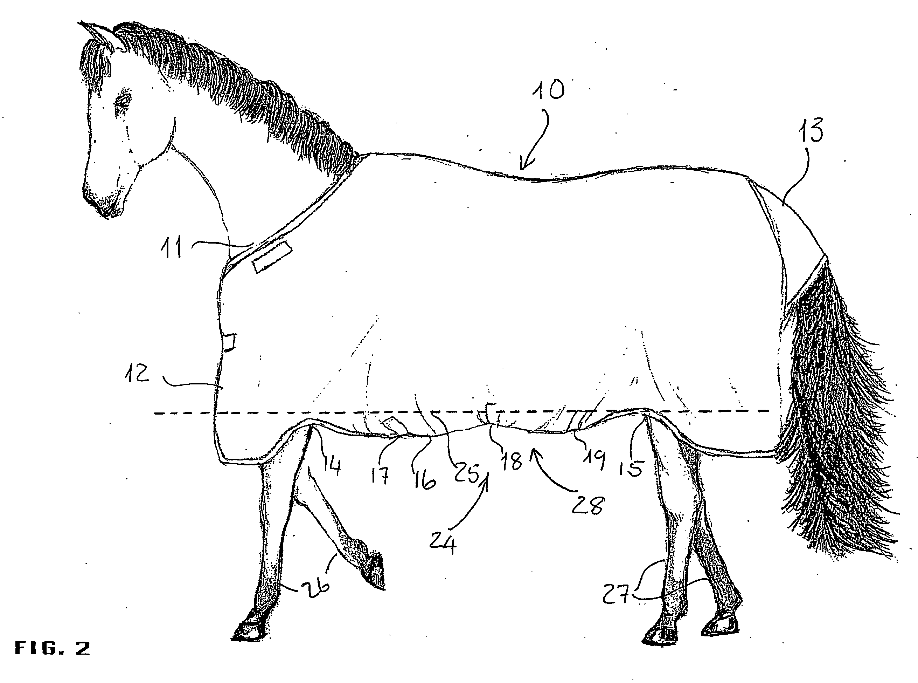

The blanket 10 is also provided on side 16' thereof with three surcingles 17', 18', 19' for securing the blanket under the belly of the horse in use and as depicted in Fig. 2. Ends 20, 21, 22 of surcingles 17', 18', 19', respectively are provided with one component of an interlocking mechanism of known construction which interlocks with the other component of said interlocking mechanism provided on short straps 17, 18, 19 on side 16 of the blanket. In use, surcingles 17' and 19' are crossed under the belly of the horse such that the component of the interlocking mechanism on end 20 engages with the other component of said interlocking mechanism on short strap 19 and the component of the interlocking mechanism on end 22 engages with the other component of the interlocking mechanism on short strap 17. The component of the interlocking mechanism on surcingle 18' interlocks with the other component on short strap 18.

The arrangements of cut-outs 14, 14' and 15, 15' means that edge 23 on sides 16, 16' of the blanket is provided with means allowing lengthwise extension of the blanket when a horse extends its legs during normal movement and which prevent gathering of material of the blanket 10 between an inner leg and the body of the horse during a reverse movement as hereinafter described in greater detail in relation to Fig. 2.

The blanket 10 can be provided with reflective strips (not shown) on the front sections 12, 12', tail section 13 and sides 16, 16' so that the horse can be readily located in the dark and will be clearly visible in the headlights of a vehicle during the hours of darkness.

Referring to Fig. 2, there is indicated the horse blanket 10 fitted on a horse and secured under the belly, indicated generally at 24, of the horse by the arrangement of surcingles 17', 18', 19' and corresponding short straps 19, 18, 17 and associated interlocking mechanisms as hereinabove described in relation to Fig. 1. Edge 23 of the blanket 10 falls below the line of the point of elbow hereinabove defined and depicted by the dashed line 25.

As indicated above, the cut-outs 14, 14' and 15, 15' on sides 16, 16', respectively allow lengthwise extension of the blanket 10 when the horse extends either its forelegs and/or hind legs and prevent gathering of the blanket between the relevant inner leg and the body of the horse during a reverse movement of the or each leg. In the case of the hind legs the gathering of the blanket, when the horse moves the leg forward, is prevented.

The cut-outs 14, 14' are arranged such that they are disposed over the forelegs 26 of the horse in a square halt position as hereinabove defined.

Likewise, the cut-outs 15, 15' are arranged so as to be disposed over the hind legs 27, more especially from a point starting from near the leaving edge of a hind leg 27 and extending forwards therefrom, as hereinabove described.

The cut-outs 14, 14' and 15, 15' on opposite sides 16, 16' of the blanket 10 define a section indicated generally at 28 which can be wrapped around and secured under the belly 24 with the attendant advantages as hereinabove described.

## Claims

1. A horse blanket (10) of the type which is secured under the belly (24) of a horse in use and the edge (23) of which falls below the line of the point of elbow (25), **characterised in that** said edge (23) is provided with means allowing lengthwise extension of the blanket (10) when the horse extends its legs and which prevent gathering of the blanket (10) between the inner leg and the body of the horse during a reverse movement of the leg, **in that** said means comprise a cut-out (14, 14', 15, 15') disposed over each of the legs of the horse when the horse is in a square halt position, and **in that** the cut-outs (14, 14', 15, 15') on opposite sides (16, 16') of the blanket (10) define a section (28) therebetween which can be wrapped around and secured under the belly (24) of the horse.

2. A horse blanket according to Claim 1, which is conformable to the body of the horse.

3. A horse blanket according to Claim 1 or 2, wherein the cut-outs (14, 14', 15, 15') are of a generally semi-circular shape in a plan view of the blanket (10).

4. A horse blanket according to any preceding claim, which is secured under the belly (24) of the horse in use by at least two pairs of fastening means (17, 18, 19 ; 17', 18', 19').

## Revendications

1. Couverture pour cheval (10) du type qui est attachée sous le ventre (24) du cheval en utilisation, et dont le bord (23) tombe en dessous de la ligne du point du coude (25), **caractérisée en ce que** ledit bord (23) est muni de moyens permettant une extension de la couverture (10) dans le sens de la longueur lorsque le cheval étend ses pattes, et qui empêchent la couverture (10) de se froncer entre la patte intérieure et le corps du cheval pendant un mouvement de la patte vers l'arrière, **en ce que** lesdits moyens comprennent une découpe (14, 14', 15, 15') disposée sur chacune des pattes du cheval lorsque le cheval est dans une position à l'arrêt ferme sur ses quatre pattes, et **en ce que** les découpes (14, 14', 15, 15') sur les côtés opposés (16, 16') de la couverture (10) définissent une section (28) entre celles-ci qui peut être enveloppée autour du ventre (24) du cheval et attachée sous celui-ci.

2. Couverture pour cheval selon la revendication 1, qui épouse le corps du cheval.

3. Couverture pour cheval selon la revendication 1 ou 2, dans lequel les découpes (14, 14', 15, 15') ont une forme globalement semi-circulaire dans une vue en plan de la couverture (10).

4. Couverture pour cheval selon l'une quelconque des revendications précédentes, qui est attachée sous le ventre (24) du cheval en utilisation, par au moins deux paires de moyens de fixation (17, 18, 19 ; 17', 18', 19').

## Patentansprüche

1. Pferdedecke (10) des Typs, der während des Gebrauchs unter dem Bauch (24) eines Pferdes befestigt wird und bei welchem die Kante (23) unterhalb der Linie des Ellbogenpunktes (25) des Pferdes liegt, **dadurch gekennzeichnet, dass** die Kante (23) mit Mitteln versehen ist, welche es erlauben, dass sich die Decke (10) in Längsrichtung erweitert, wenn das Pferd die Beine nach vorne bzw. nach hinten bewegt und welche ein Zusammenraffen der Decke (10) zwischen der Innenseite des Beines und dem Körper des Pferdes während einer Rückwärtsbewegung des Beines verhindern, dass die genannten Mittel einen Ausschnitt (14, 14', 15, 15') umfassen, der sich über jedem der Beine des Pferdes befindet, wenn das Pferd eine geschlossene Standposition einnimmt, und dass die Ausschnitte (14, 14', 15, 15') an den gegenüberliegenden Seiten (16, 16') der Decke (10) einen zwischen ihnen liegenden Abschnitt (28) definieren, der um den Bauch eines Pferdes herumgelegt und unter dem Bauch (24) des Pferdes befestigt werden kann.

2. Pferdedecke nach Anspruch 1, die an den Körper des Pferdes angepasst werden kann.

3. Pferdedecke nach Anspruch 1 oder 2, bei welcher die Ausschnitte (14, 14', 15, 15') in einer Draufsicht auf die Decke (10) eine im Wesentlichen halbkreisförmige Form aufweisen.

4. Pferdedecke nach einem der vorhergehenden Ansprüche, die während des Gebrauchs unter dem Bauch (24) eines Pferdes durch wenigstens zwei Paare von Befestigungsmitteln (17, 18, 19; 17', 18', 19') befestigt wird.
